# EUROPÄISCHE PATENTSCHRIFT

(11) **EP 3 834 278 B1**
(45) Veröffentlichungstag und Bekanntmachung des Hinweises auf die Patenterteilung: **06.09.2023**
(21) Anmeldenummer: 19742728.9
(22) Anmeldetag: 19.07.2019
(51) Int. Cl.: H02M 1/32, H02M 3/155, H02M 3/156

(54) **SPANNUNGSWANDLER**
VOLTAGE CONVERTER
CONVERTISSEUR DE TENSION

(30) Priorität: 09.08.2018 DE 102018213453
(43) Veröffentlichungstag der Anmeldung: 16.06.2021
(73) Patentinhaber: KUKA Deutschland GmbH, 86165 Augsburg (DE)
(72) Erfinder: ZEHETBAUER, Sebastian, 81673 München (DE); WERNER, Gerhard, 88471 Laupheim (DE); ZIMMERMANN, Matthias, 89312 Günzburg (DE); SCIBILIA, Roberto, 85336 Freising (DE)
(74) Vertreter: Oelke, Jochen
(86) Internationale Anmeldenummer: PCT/EP2019/069506
(87) Internationale Veröffentlichungsnummer: WO 2020/030409

(56) Entgegenhaltungen:
- EP-A2- 3 101 794
- EP-A2- 3 101 794
- US-A1- 2004 208 027
- US-A1- 2004 208 027
- TING QIAN ET AL: "Input-Series Two-Stage DC-DC Converter with Inductor Coupling", POWER ELECTRONICS SPECIALISTS CONFERENCE, 2007. PESC 2007. IEEE, IEEE, PISCATAWAY, NJ, USA, 17. Juni 2007 (2007-06-17), Seiten 326-330, XP031218310, ISBN: 978-1-4244-0654-8
- TING QIAN ET AL: "Input-Series Two-Stage DC-DC Converter with Inductor Coupling", POWER ELECTRONICS SPECIALISTS CONFERENCE, 2007. PESC 2007. IEEE, IEEE, PISCATAWAY, NJ, USA, 17 June 2007 (2007-06-17), pages 326-330, XP031218310, ISBN: 978-1-4244-0654-8

## Beschreibung

Die Erfindung betrifft einen Spannungswandler, welcher als Abwärtswandler ausgebildet ist, zum Tiefsetzen einer Eingangsgleichspannung in eine gegenüber der Eingangsgleichspannung niedrigere Ausgangsgleichspannung. Die Erfindung betrifft außerdem eine zugehörige Steuervorrichtung zum Ansteuern eines solchen Spannungswandlers.

Aus der US 2011/0194317 A1 ist ein Spannungswandler bekannt, welcher einen Transformator enthält mit zwei Primärspulen und einer Sekundärspule. Der Wandler weist einen Gleichstromeingang auf und parallel dazu eine Kondensatorbank, umfassend zwei Kondensatoren. Jeder Primärspule ist ein Schalter zugeordnet. Ein Gate-Treiber-Rückkopplungsmodul gibt ein pulsweitenmoduliertes Signal aus, um entweder die erste oder die zweite Primärspule anzusteuern. Ein Gate-Ansteuerschalter steuert den ersten und zweiten Schalter mit Hilfe des pulsbreitenmodulierten Signals an. Ein Logiksteuermodul erfasst, welcher der zwei Kondensatoren eine höhere Spannung aufweist und steuert den Schalter einer zugehörigen Primärspule mit Hilfe des pulsbreitenmodulierten Signals an. Der genannte Spannungswandler ist ein Sperrwandler und bringt die für Sperrwandler typischen Vor- und Nachteile mit sich, z.B. eine galvanische Trennung zwischen Eingangsseite und Ausgangsseite, sowie eine Einschränkung der üblicherweise sinnvoll umsetzbaren Leistung auf maximal ca. 250 W.

Aus der Veröffentlichung "Input-Series Two-Stage DC-DC Converter with Inductor Coupling" von Qian et al. in Power Electrics Specialists Conference 2007, ist ebenfalls ein Spannungswandler bekannt, bei dem zwei Stromkreise unter anderem durch gekoppelte Drosseln verbunden sind, wobei die beiden Kreise durch entsprechende Halbleiterelement abwechselnd geschalten und damit geladen werden.

Aus der EP 3 101 794 A2 ist ein AC-DC Wandler bekannt bei dem Drosseln durch einen gemeinsamen Magnetkern gekoppelt sind.

Aus der US 2004/208027 A1 ist eine Energieversorgungseinheit bekannt bei dem Spulen durch einen gemeinsamen Magnetkern gekoppelt sind.

Aufgabe der Erfindung ist es, einen als Abwärtswandler ausgebildeten Spannungswandler zu schaffen, welcher trotz kostengünstigem Schaltungsaufbau eine hohe Effizienz aufweist.

Die Aufgabe wird erfindungsgemäß gelöst durch einen Spannungswandler, welcher als Abwärtswandler ausgebildet ist, zum Tiefsetzen einer Eingangsgleichspannung in eine gegenüber der Eingangsgleichspannung niedrigere Ausgangsgleichspannung, aufweisend
- eine erste Abwärtswandler-Schaltungsanordnung, umfassend ein erstes Halbleiterschaltelement mit einem ersten Steuereingang, eine erste gekoppelte Drossel mit einer ersten Freilaufdiode, sowie einen ersten Eingangskondensator und einen ersten Ausgangskondensator,
- eine zweite Abwärtswandler-Schaltungsanordnung, umfassend ein zweites Halbleiterschaltelement mit einem zweiten Steuereingang, eine zweite gekoppelte Drossel mit einer zweiten Freilaufdiode, sowie einen zweiten Eingangskondensator und einen zweiten Ausgangskondensator,

wobei der erste Eingangskondensator der ersten Abwärtswandler-Schaltungsanordnung und der zweite Eingangskondensator der zweiten Abwärtswandler-Schaltungsanordnung in Serie angeordnet sind, um sich die Eingangsspannung zu teilen,
wobei das erste Halbleiterschaltelement und die erste Freilaufdiode, sowie das zweite Halbleiterschaltelement und die zweite Freilaufdiode in Serie angeordnet sind, und die erste Freilaufdiode und die zweite Freilaufdiode ausgebildet sind bei einem geöffneten Zustand des jeweils zugeordneten Halbleiterschaltelementes die Schaltung vor einer Überspannung der ersten gekoppelten Drossel und der zweiten gekoppelten Drossel zu schützen, und/oder den Stromfluss der ersten gekoppelten Drossel und der zweiten gekoppelten Drossel während des Abbaus des magnetischen Flusses der ersten gekoppelten Drossel und der zweiten gekoppelten Drossel zu ermöglichen,
wobei die erste gekoppelte Drossel und die zweite gekoppelte Drossel transformatorisch miteinander gekoppelt sind,
wobei der erste Ausgangskondensator und der zweite Ausgangskondensator in Serie angeordnet sind und einen Spannungsteiler bilden, und die erste Abwärtswandler-Schaltungsanordnung und die zweite Abwärtswandler-Schaltungsanordnung einen gemeinsamen Feedbackspannungsteiler aufweisen, welcher einen ersten Widerstand und einen zweiten Widerstand aufweist, die erste gekoppelte Drossel und die zweite gekoppelte Drossel, einen gemeinsamen Magnetkern aufweisen,
wobei der gemeinsame Magnetkern wenigstens eine Hilfswicklung mit wenigstens einem Abgriff für wenigstens ein Messsignal aufweist, wobei der Spannungswandler im Übergang zwischen kontinuierlichen Betrieb und Lückbetrieb betrieben wird, welcher als freischwingende Betriebsart bezeichnet wird,
wobei das erste Halbleiterschaltelement des Spannungswandlers und das zweite Halbleiterschaltelement des Spannungswandlers dann in Abhängigkeit des wenigstens einen Messignals in einem optimalen Zeitpunkt eingeschaltet werden, wenn der magnetische Fluss der ersten gekoppelten Drossel und der zweiten gekoppelten Drossel vollständig abgebaut ist.
wobei Ein Spannungswandler ist im Allgemeinen ausgebildet eine Eingangsspannung eines bestimmten Potentials in eine Ausgangsspannung mit einem von der Eingangsspannung abweichenden Potential zu wandeln. Beispielsweise kann der Spannungswandler ein Gleichspannungswandler sein, welcher wenigstens ein energieübertragendes Bauelement, wie einen Kondensator, eine Induktivität oder einen Kondensator und wenigstens eine Induktivität aufweist. Der Gleichspannungswandler kann insbesondere ein Abwärtswandler sein, welcher wenigstens eine Induktivität aufweist. Der Abwärtswandler bzw. Tiefsetzsteller setzt eine höhere Eingangsspannung in eine niedrigere Ausgangsspannung um.

Die Eingangsgleichspannung kann eine Spannung sein, welche beispielsweise aus einem gleichgerichteten Dreiphasennetz oder einem gleichgerichteten Einphasennetz oder einen Zwischenkreis oder einem Gleichspannungsnetz entnommen wird.

Die Ausgangsgleichspannung kann eine zu einer Eingangsspannung im Potential und/oder im zeitlichen Verlauf veränderte Spannung sein. Die Ausgangsgleichspannung kann insbesondere ein kleineres Potential als die Eingangsgleichspannung aufweisen.

Die Abwärtswandler-Schaltungsanordnung baut auf einem an sich bekannten Abwärtswandler auf. Der Spannungswandler weist erfindungsgemäß jedoch zwei separate Abwärtswandler-Schaltungsanordnungen auf, welche schaltungstechnisch verbunden sind.

Das Halbleiterschaltelement kann als ein Transistor ausgebildet sein, welcher beispielsweise ein Bipolartransistor oder ein Feldeffekttransistor oder ein Bipolartransistor mit isolierter Gate-Elektrode (IGBT) sein kann. Insbesondere kann der Transistor ein MOSFET (Metall-Oxid-Halbleiter-Feldeffekttransistor) sein, welcher aus Silizium gefertigt sein kann.

Bei der erfindungsgemäßen Schaltung ist vorgesehen, dass die erste und zweite gekoppelte Drossel transformatorisch miteinander gekoppelt werden. Die transformatorische Koppelung kann derart genutzt werden, dass eine Symmetrierung der Spannungen an den beiden gekoppelten Drosseln erreicht wird. Die Symmetrierung ermöglicht es, dass an der ersten gekoppelten Drossel und an der zweiten gekoppelten Drossel jeweils eine Spannung induziert wird, welche das gleiche Potential aufweist. Darüber hinaus kann die transformatorische Koppelung den zeitlichen Verlauf der Spannungsänderungen beim Magnetisieren und/oder Entmagnetisieren der ersten gekoppelten Drossel und der zweiten gekoppelten Drossel symmetrieren.

Die Eingangsgleichspannung teilt sich weitgehend gleichmäßig auf den ersten und zweiten Eingangskondensator auf, welcher als Spannungsteiler in Serie zu der Eingangsgleichspannung geschaltet ist. Die Einschaltdauer und Ausschaltdauer des Spannungswandlers wird derart geregelt, dass eine vordefinierte Ausgangsgleichspannung erzeugt wird. Dazu wird die Ausgangsgleichspannung während der Einschaltdauer aus der Eingangsgleichspannung gespeist und während der Ausschaltdauer aus den sich abbauenden Magnetfeldern der vier Drosseln gespeist.

Bei gleichmäßiger Aufteilung liegt die Eingangsgleichspannung während der Einschaltdauer des ersten und des zweiten Halbleiterschaltelementes zur einen Hälfte an der ersten Abwärtswandler-Schaltungsanordnung an und zur anderen Hälfte an der zweiten Abwärtswandler-Schaltungsanordnung an. Während der Einschaltdauer des Spannungswandlers bauen die Drosseln jeweils ein Magnetfeld auf und die Ausgangsspannungen der ersten und zweiten Abwärtswandler-Schaltungsanordnungen liegen an dem ersten Ausgangskondensator und an dem zweiten Ausgangskondensator an und definieren jeweils zur Hälfte die abzuführende Ausgangsgleichspannung. Durch die transformatorische Koppelung je einer gekoppelten Drossel der ersten und zweiten Abwärtswandler-Schaltungsanordnung kann trotz Toleranzen gewährleistet werden, dass jeweils zumindest annähernd die gleiche Ausgangsspannung in der ersten Abwärtswandler-Schaltungsanordnung und der zweiten Abwärtswandler-Schaltungsanordnung anliegt. Die Ausgangsspannungen der ersten und zweiten Abwärtswandler-Schaltungsanordnung addieren sich über die Serienschaltung des ersten und zweiten Ausgangskondensators und können an eine nachfolgende Schaltung abgegeben werden.

Während der Ausschaltdauer der Halbleiterschaltelemente wird der Stromfluss durch das sich abbauende Magnetfeld in den Drosseln aufrechterhalten, welcher durch die jeweilige erste und zweite Freilaufdiode ermöglicht wird. Die Eingangsgleichspannung ist in diesem Betriebszustand nicht an der Erzeugung der Ausgangsgleichspannung beteiligt.

Zusammenfassend kann die Funktion ebenso wie folgt beschrieben werden, dass eine synchrone Arbeitsweise des in Reihe geschalteten ersten und zweiten Halbleiterschalelements, als auch des in Reihe geschalteten ersten und zweiten Eingangskondensators und des in Reihe geschalteten ersten und zweiten Ausgangskondensators gelingt, wenn die Abwärtswandler-Schaltungsanordnung zweifach vorhanden ist und in Reihe geschaltet wird, wobei die erste und die zweite in Reihe angeordnete Abwärtswandler-Schaltungsanordnung vorteilhafterweise gespiegelt aufgebaut sind.

Idealerweise teilt sich die Eingangsgleichspannung gleichmäßig auf den ersten und zweiten Eingangskondensator auf, sowie auf die weiteren elektronischen Bauelemente des Spannungswandlers. Bei realen Bauteilen mit parasitären Effekten wird dies nicht vollständig der Fall sein, da beispielsweise Toleranzen der ersten gekoppelten Drossel und/oder der zweiten gekoppelten Drossel und/oder unterschiedliche Schaltzeiten des ersten und zweiten Halbleiterschalelements einem vollständig synchronen Verhalten entgegenstehen.

Als Maßnahme wird deshalb unter anderem vorgeschlagen, eine Anordnung zu wählen, bei der die benötigte Induktivität je Tiefsetzsteller mit zwei gekoppelten Drosseln realisiert wird, wobei die beiden gekoppelten Drosseln der beiden Tiefsetzsteller transformatorisch über einen gemeinsamen Magnetkern gekoppelt sind.

Für das Verständnis der Spannungssymmetrierung kann zunächst der Vorgang des Abmagnetisierens betrachtet werden. Während des Abmagnetisierens sind die erste und zweite Freilaufdiode leitend und der erste und zweite Halbleiterschalter nicht leitend betrieben. Die Schaltung befindet sich somit im Zustand der Ausschaltdauer. Außerdem werden die beiden nicht gekoppelten Drosseln für das Verständnis der idealen Schaltung vernachlässigt.

Aufgrund der transformatorischen Kopplung des ersten Tiefsetzstellers und des zweiten Tiefsetzstellers sind die Spannungen der jeweiligen gekoppelten Drosseln gleich groß. Durch den physikalischen Zusammenhang des zweiten Kirchhoffschen Gesetzes, der Maschenregel, liegt die Spannung der gekoppelten Drossel des ersten Tiefsetzstellers über der ersten Freilaufdiode auch an dem ersten Ausgangskondensator an, wobei der Spannungsabfall an der ersten Freilaufdiode näherungsweise null ist. Somit entspricht die Spannung an dem ersten Ausgangskondensator zumindest näherungsweise der Spannung der gekoppelten Drossel des ersten Tiefsetzstellers.

Die Spannung der gekoppelten Drossel des zweiten Tiefsetzstellers liegt über der zweiten Freilaufdiode an dem zweiten Ausgangskondensator an, wobei ein Spannungsabfall an der zweiten Freilaufdiode näherungsweise null ist. Somit entspricht die Spannung an dem zweiten Ausgangskondensator näherungsweise der Spannung der gekoppelten Drossel des zweiten Tiefsetzstellers.

Erfindungsgemäß werden die Spannungen des ersten und zweiten Ausgangskondensators demgemäß über die transformatorische Koppelung der ersten und zweiten gekoppelten Drossel zumindest annähernd symmetriert. Die Summe der Spannungen am ersten und zweiten Ausgangskondensator ergibt die Ausgangsgleichspannung des Spannungswandlers.

Während des Aufmagnetisierens sind die erste und zweite Freilaufdiode nicht leitend und der erste und zweite Halbleiterschalter sind leitend betrieben. Die Schaltung befindet sich somit im Zustand der Einschaltdauer.

Die Spannung über dem ersten Eingangskondensator ist wegen der Maschenregel im Kreis des ersten Eingangskondensators, des ersten Halbleiterschaltelemets, der ersten gekoppelten Drossel und des ersten Ausgangskondensators annähernd gleich der Spannung der ersten gekoppelten Drossel und des ersten Ausgangskondensators. Die Spannung über den zweiten Eingangskondensator ist wegen der Maschenregel im Kreis des zweiten Eingangskondensators, des zweiten Halbleiterschaltelemets, der zweiten gekoppelten Drossel und des zweiten Ausgangskondensators annähernd gleich der Spannung der zweiten gekoppelten Drossel und des zweiten Ausgangskondensators. Somit wird wegen der während der Ausschaltdauer erwirkten annähernden Symmetrierung der Spannungen über den ersten Ausgangskondensator und den zweiten Ausgangskondensators und wegen der Transformatorwirkung an den beiden gekoppelten ersten und zweiten gekoppelten Drosseln auch die Spannung über den Eingangskondensatoren annähernd gleichmäßig aufgeteilt und ihre Summe ergibt wegen der Maschenregel über dem ersten Eingangskondensator und dem zweiten Eingangskondensator die gesamte Eingangsspannung.

Die Ausgangsspannung kann mit einem Spannungsteiler aus dem ersten Widerstand und dem zweiten Widerstand gemessen und einer Regel-Schaltung zugeführt werden. Der Strom kann mit einem Shuntwiderstand gemessen werden und optional ebenfalls der Steuervorrichtung zugeführt werden. Weitere Methoden der Strommessung sind möglich, z.B. die Verwendung eines Stromtransformators. Die Steuervorrichtung stellt aufgrund der gemessenen Ausgangsspannung und aufgrund des Stromes die Einschalt- und Ausschaltdauer des ersten und des zweiten Halbleiterschaltelements ein.

Der erfindungsgemäße Spannungswandler in all seinen offenbarten Ausführungsvarianten kann insbesondere Teil eines Roboters, d.h. Teil einer Steuervorrichtung eines Roboters, wie eine Robotersteuerung sein, die ausgebildet und eingerichtet ist, ein erstes Halbleiterschaltelement des Spannungswandlers an einem ersten Steuereingang und ein zweites Halbleiterschaltelement des Spannungswandlers an einem zweiten Steuereingang zu steuern. Der Spannungswandler in Verbindung mit einem Roboter kann dazu eingesetzt werden, die elektrischen Antriebe der Gelenke des Roboters, d.h. dessen Roboterarms anzusteuern.

Der Spannungswandler kann eine erste nicht gekoppelte Drossel und eine zweite nicht gekoppelte Drossel aufweisen, welche in Serie zu der ersten und der zweiten gekoppelten Drossel angeordnet sind.

Die nicht gekoppelten Drosseln können neben der Energiespeicherung in deren Magnetfeld insbesondere zur Entstörung der Ströme des Spannungswandlers verwendet werden. Die Entstörung kann Differenzen der Schaltzyklen der Halbleiterschaltelemente ausgleichen.

Die Funktion der Schaltung kann ebenso wie folgt beschrieben werden, unter der Annahme, dass die Zeitpunkte des Ein- oder Ausschaltens des ersten und zweiten Halbleiterschalters in einer realen Schaltung nicht exakt gleichzeitig sein werden, und demgemäß eine ideale Betriebsweise nicht sichergestellt ist. Ein Ausgleich der Abweichung kann durch das Einfügen einer ersten und zweiten nicht gekoppelten Drossel geschaffen werden, welche jeweils in Serie zu der ersten und zweiten gekoppelten Drossel angeordnet sind. Mithilfe der ersten und zweiten nicht gekoppelten Drosseln kann ein quantifizierbarer Kompromiss gefunden werden, der einerseits einen zeitlichen Versatz der Schaltzeiten ausgleicht und andererseits eine gut beherrschbare Differenz der zu synchronisierenden Spannungen in der ersten und der zweiten Abwärtswandler-Schaltungsanordnung ermöglicht. Ist die Streuinduktivität der gekoppelten Drosseln groß genug, und bekannt und quantifizierbar, können die nicht gekoppelten Drosseln gegebenenfalls entfallen.

Die Drossel kann als eine Induktivität ausgebildet sein, welche insbesondere als eine Spule ausgebildet sein kann.

Der Spannungswandler kann einen Messwiderstand aufweisen, welcher in Serie zu wenigstens einer der Drosseln oder einer der Freilaufdioden oder einer der Halbleiterschaltelemente angeordnet ist, wobei der Messwiderstand einen ersten Anschluss aufweist, der zum Abgreifen einer ersten Messspannung ausgebildet ist und einen zweiten Anschluss aufweist, der idealerweise sowohl mit der nicht gekoppelten Drossel als auch mit der Masse der Steuerspannung, die insbesondere sekundärseitig vorgesehen ist, verbunden ist. Je nach Position des Messwiderstandes kann auch eine andere Lage der Masse der Steuerspannung sinnvoll sein.

Der Messwiderstand kann zwar an verschiedenen Stellen angeordnet sein, aber an der besagten Stelle mit der Masse auf der Sekundärseite ergibt sich eine ungewöhnliche, aber vorteilhafte Position.

In einer speziellen Realisierung kann aufgrund der ausgangsseitigen Schaltung es jedoch so sein, dass der Widerstand in Reihe zu einem Halbleiterschaltelement angeordnet ist. Demnach hat sich auch die Steuerspannungsmasse nach unten verschoben.

Der Messwiderstand kann als ein ohmscher Widerstand ausgebildet sein, welcher als Messumformer zum Umformen eines elektrischen Stroms in eine elektrische Spannung genutzt werden kann. Dazu sollte er vorzugsweise eine hohe Genauigkeit aufweisen, unabhängig von thermischen Effekten sein und keine Thermospannung erzeugen.

Genutzt wird der Messwiderstand beispielsweise zur Erzeugung einer Messspannung, insbesondere durch eine Steuervorrichtung zur Bestimmung des Ausgangsstroms. Die Steuervorrichtung kann aufgrund des gemessenen Stromes die Einschalt- und Ausschaltdauer des ersten und des zweiten Halbleiterschaltelements einstellen.

Der Messwiderstand kann als ein Metallschicht- oder ein Kohlschichtwiderstand ausgebildet sein, welcher einen vorbestimmten Widerstandswert aufweist.

Der Spannungswandler kann wenigstens einen Abgriff für Messsignale aufweisen, derart, dass der wenigstens ein Abgriff ausgebildet ist, wenigstens ein Messsignal, insbesondere wenigstens eine Messspannung, zur Verfügung zu stellen.

Der Abgriff kann in dieser Ausführungsvariante ausgebildet sein, einen Messpunkt von elektronischen Signalen innerhalb der Schaltung zu schaffen. Messpunkte können vorzugsweise zum Abgriff von Ausgangssignalen oder Steuersignalen in einer Schaltung vorgesehen sein.

Die abgegriffenen Signale können beispielsweise zur Steuerung des Spannungswandlers genutzt werden oder als ein Steuersignal für vorhergehende oder nachfolgende Schaltungen dienen.

Der Abgriff kann als elektrischer Anschluss für eine Steuervorrichtung ausgebildet sein, beispielsweise kann der Abgriff als ein Pin, als eine Klemme oder als ein Lötnagel oder Lötöse ausgebildet sein.

Das Messsignal kann eine physikalische Größe sein, welche in ein elektrisches Signal umgewandelt wird. Insbesondere kann das Messsignal eine Messspannung sein.

Der gemeinsame Kern der gekoppelten Drosseln kann wenigstens eine Hilfswicklung mit wenigstens einem Abgriff für wenigstens ein Messsignal aufweisen.

Die erste gekoppelte Drossel und die zweite gekoppelte Drossel, weisen einen gemeinsamen Magnetkern auf, der wenigstens eine Hilfswicklung mit wenigstens einem Abgriff für wenigstens ein Messsignal und/oder für die Steuerspannungsversorgung aufweist. Die Hilfswicklung ist als eine Wicklung des gemeinsamen Magnetkerns der ersten gekoppelten Drossel und der zweiten gekoppelten Drossel ausgebildet, sodass ein Abgriff eines Messsignals ermöglicht wird. Insbesondere kann das Messsignal aufgrund der magnetischen Änderungen in den Induktivitäten eine elektrische Ladung induzieren, die dann als Messsignal abgegriffen werden kann.

Beispielsweise kann durch eine aufgebrachte Hilfswicklung eine Messspannung am Magnetkern der gekoppelten Drosseln gemessen werden, welche durch eine Steuervorrichtung ausgewertet werden kann.

Die Funktion kann ebenso beispielhafter beschrieben werden, dass zur Reduzierung der Schaltverluste auf den Magnetkern der transformatorisch gekoppelten ersten und zweiten Drossel eine zusätzliche Wicklung aufgebracht wird. Die Funktion dieser zusätzlichen Hilfswicklung ist es, dass aus ihr Energie für die Regelschaltung des Wandlers gewonnen werden kann und zudem ein Abbild der Spannungsverläufe im Leistungszweig, welcher der Wicklung der ersten und der zweiten gekoppelten Drossel entspricht, ermittelt werden kann. Die gewonnene Energie kann verwendet werden, um die Halbleiterschaltelemente verlustarm während des Absinkens der Spannung im Leistungszweig zu schalten. Dazu wird der Spannungswandler nicht mit fester Taktfrequenz und variablem Puls-Pausen-Verhältnis betrieben, sondern im Übergang zwischen kontinuierlichen Betrieb und Lückbetrieb, welche als freischwingende Betriebsart bezeichnet wird.

Die Hilfswicklung kann als eine Drahtwicklung ausgebildet sein, insbesondere kann die Hilfswicklung als eine Drahtwicklung auf dem Magnetkern der transformatorisch gekoppelten Drosseln ausgebildet sein.

Der Spannungswandler kann ausgebildet sein Eingangsgleichspannungen tiefzusetzen, insbesondere eine gleichgerichtete Eingangsgleichspannung aus einem Einphasennetz, Dreiphasennetz und/oder eine Eingangsgleichspannungen aus einem Zwischenkreis tiefzusetzen.

Die gleichgerichtete Einphasennetz-Spannung, Dreiphasennetz-Spannung und/oder die Zwischenkreis-Spannung kann als Eingangsgleichspannung einer Schaltung genutzt werden, welche insbesondere Eingangsgleichspannungen verarbeiten kann.

Mithilfe der gleichgerichteten Einphasennetz-Spannung, Dreiphasennetz-Spannung und/oder der Zwischenkreis-Spannung ist es beispielsweise möglich eine Ausgangsgleichspannung zu erzeugen, welche in ihrem Potential verändert zu der Eingangsgleichspannung ist. Insbesondere können Ausgangsgleichspannungen erzeugt werden, welche ein kleineres Potential haben als die Eingangsgleichspannung.

Die gleichgerichtete Dreiphasennetz-Spannung kann beispielsweise eine Spannung aus einem Dreiphasennetz sein, welche gleichgerichtet wurde. Die gleichgerichtete Einphasennetz-Spannung kann beispielsweise eine Spannung aus einem Einphasennetz sein, welche gleichgerichtet wurde.

Die Zwischenkreisspannung kann eine Spannung sein, welche beispielsweise aus induktiven Effekten zurückgewonnen wurde oder kann eine einphasige oder dreiphasige Spannung sein, welche gleichgerichtet wurde, oder sie kann eine Gleichspannung sein.

Die Halbleiterschaltelemente können ausgebildet sein in Abhängigkeit von Steuersignalen, die über einen jeweiligen Steuereingang des jeweiligen Halbleiterschaltelementes zugeführt sind, zu schalten.

Die Halbleiterschaltelemente können von einem Eingangsstrom oder einer Eingangsspannung an einem Steuereingang gesteuert öffnen oder schließen sowie teilgeöffnet oder teilgeschlossen werden.

Insbesondere können die Halbleiterschaltelemente zur Steuerung der Spannungsänderung des Spannungswandlers verwendet werden, sodass ein Stromfluss einer Eingangsspannung zu der ersten und/oder der zweiten gekoppelten Drossel ermöglicht oder verhindert wird oder in Teilen möglich ist.

Der Spannungswandler kann einen Masseabgriff aufweisen, welcher auf der Sekundärseite des Spannungswandlers kontaktiert ist, insbesondere zwischen dem Messwiderstand und der ersten oder zweiten nicht gekoppelten Drossel, und das Bezugspotential für die Steuerspannungsversorgung und/oder das Messsignal und/oder mindestens eine Steuerspannung und/oder mindestens eine Messspannung zur Verfügung stellt.

Der Masseabgriff kann für nachfolgende Schaltungen oder Steuervorrichtungen ein Bezugspotential zur Verfügung stellen, durch welches ein definiertes null Potential vorgegeben wird.

Die Erfindung betrifft auch eine Steuervorrichtung, die ausgebildet ist zum Ansteuern eines Spannungswandlers, wie beschrieben. Die Steuervorrichtung kann dazu ausgebildet und eingerichtet sein, das erste Halbleiterschaltelement des Spannungswandlers am ersten Steuereingang und das zweite Halbleiterschaltelement des Spannungswandlers am zweiten Steuereingang zu steuern, d.h. insbesondere zu schalten.

Die Steuervorrichtung kann ausgebildet und eingerichtet sein Halbleiterschaltelemente anzusteuern, sodass das erste Halbleiterschaltelement und/oder das zweite Halbleiterschaltelement mit einer Steuerspannung und/oder einem Steuerstrom angesteuert werden. Die Steuerung kann eine bedarfsangepasste Steuerlogik zur Steuerung des ersten und/oder des zweiten Halbleiterschaltelementes aufweisen.

Durch die Steuervorrichtung kann beispielsweise eine Ausgangsspannung mit einem definierten Potential erzeugt werden, derart, dass die Steuervorrichtung das erste und das zweite Halbleiterschaltelement mit variablen Einschalt- und/oder Ausschaltzeiten steuert.

Die Steuervorrichtung kann beispielsweise ein Mikrocontroller oder ein Steuercomputer oder ein Integrierter Schaltkreis sein, welcher ausgebildet und eingerichtet ist, die Halbleiterschaltelemente anzusteuern.

Die Steuervorrichtung kann ausgebildet und eingerichtet sein, wenigstens ein Messsignal aufzunehmen, insbesondere eine erste Messspannung, eine zweite Messspannung und/oder wenigstens ein erstes Messsignal wenigstens einer Hilfswicklung des Spannungswandlers aufzunehmen.

Das Messsignal kann elektrische Größen umfassen oder physikalische Größen, welche in elektrische Größen umgewandelt werden.

Beispielsweise können Messsignale zur Verifikation der Funktion des Spannungswandlers verwendet werden, insbesondere können die Messsignale elektrische Größe wie zum Beispiel die Ausgangsspannung oder -strom der jeweiligen Schaltung oder elektrische Messgrößen enthalten, welche zur Steuerung des Spannungswandlers verwendet werden.

Die Steuervorrichtung kann eingerichtet sein das erste Halbleiterschaltelement des Spannungswandlers und das zweite Halbleiterschaltelement des Spannungswandlers bezüglich einer veränderbaren Einschaltdauer und/oder einer veränderbaren Ausschaltdauer zu steuern, sodass die Schaltfrequenz des Spannungswandlers durch eine minimale Einschaltdauer und/oder minimale Ausschaltdauer begrenzt ist.

Beispielsweise kann durch den Tastgrad die Ausgangsspannung des Spannungswandlers gesteuert und verändert werden.

Die Steuervorrichtung kann eingerichtet sein, den Spannungswandler in einem freischwingendem Betriebsmodus anzusteuern, der in einem Übergangsbereich zwischen Lückbetrieb und kontinuierlichen Betrieb liegt.

Die Funktion kann beispielhaft wie folgt beschrieben werden, dass die Schaltfrequenz, welche sich aufgrund des freischwingenden Verhaltens je nach Eingangsspannung und Last einstellen würde und bei geringer werdender Ausgangslast steigen würde, begrenzt werden soll. Denn ein Nachteil einer steigenden Schaltfrequenz wäre, dass die Schaltverluste in etwa proportional zur Schaltfrequenz ansteigen würden. Im Teillastbetrieb oder im Leerlaufbetrieb findet also aufgrund der begrenzten maximalen Schaltfrequenz ein Übergang vom Betrieb im freischwingenden Zustand zum Lückbetrieb statt. Die maximale Schaltfrequenz kann beim Entwurf der Schaltung frei gewählt werden und stellt einen Kompromiss zwischen einem möglichst guten dynamischen Regelverhalten und einem Betrieb mit möglichst geringen Teillast- oder Leerlaufverlusten dar. Eine Möglichkeit zur Begrenzung der Schaltfrequenz ist beispielsweise die Vorgabe einer minimalen Einschaltdauer oder Ausschaltdauer. Diese Möglichkeit kann in Verbindung mit dem vorliegenden Spannungswandler genutzt werden.

Die Steuervorrichtung kann ausgebildet und eingerichtet sein, den Verlauf oder den Augenblickswert der ersten Messspannung, den Verlauf oder den Augenblickswert der zweiten Messspannung und den Verlauf oder den Augenblickswert des wenigstens ersten Messsignals der wenigstens einen Hilfswicklung des Spannungswandlers zu messen oder zu verarbeiten, die Messungen der Verläufe oder Augenblickswerte der ersten Messspannung, der zweiten Messspannung und des wenigstens ersten Messsignals der wenigstens einen Hilfswicklung des Spannungswandlers für die schaltende Steuerung des ersten Halbleiterschaltelements und des zweiten Halbleiterschaltelements zu nutzen, insbesondere durch eine Pulsweitenmodulation und/oder Frequenzmodulation.

Beispielsweise können dabei Einzelwerte aufsummiert werden oder Berechnungen bzw. Umrechnungen durchgeführt werden, bevor das Ergebnis mit dem Schwellwert verglichen wird.

Insoweit kann die Steuervorrichtung auch ausgebildet und eingerichtet sein, den Verlauf der ersten Messspannung, den Verlauf der zweiten Messspannung und den Verlauf des ersten Messsignals der wenigstens einen Hilfswicklung zu messen, und die Messung des Verlaufs der ersten Messspannung, der zweiten Messspannung und des ersten Messsignals mit wenigstens einem eingestellten Schwellwert zu vergleichen, und das erste Halbleiterschaltelement und das zweite Halbleiterschaltelement bei Erreichen des jeweiligen Schwellwertes zu schalten.

Der Schwellwert kann ein berechneter Wert der Steuervorrichtung sein und wird zum Vergleich mit gemessenen und/oder verarbeiteten Werten des Spannungswandlers verwendet.

Insbesondere kann der Schwellwert zur Verwendung von Logik Programmierung und/oder zum Abgleich von Bedingungen genutzt werden.

Der Schwellwert kann einen Wert aufweisen, welcher durch Vergleich mit einem Messwert eine Aktion auslösen kann, beispielsweise kann ein Über- oder Unterschreiten eines Schwellwertes, festgestellt durch Vergleich mit einem Messwert, dazu führen, dass wenigstens eines der Halbleiterschaltelemente gesteuert wird.

Die Funktion kann wie folgt beschrieben werden, dass der Spannungswandler nicht mit einer festen Taktfrequenz und einem variablen Puls-Pausen-Verhältnis betrieben wird, sondern im Übergang zwischen kontinuierlicher Betrieb und Lückbetrieb, welche als freischwingende Betriebsart bezeichnet wird. Der Spannungswandler ist in dieser Betriebsart ein freischwingender Abwärtswandler. Der Betrieb im Übergang zwischen kontinuierlicher Betrieb und Lückbetrieb kann auch vorteilhaft gegenüber einem Betrieb mit fester Taktfrequenz sein, da so vor Beginn jeder neuen Magnetisierungsphase gewartet wird, dass die Energie in den vier Drosseln vollständig abgebaut ist. Dadurch kommt es zu Resonanzschwingungen, welche zur Verringerung der Schaltverluste genutzt werden können, indem mittels Messungen mindestens einer Hilfswicklung die Halbleiterschaltelemente in einem optimalen Zeitpunkt eingeschaltet werden können. Durch den freischwingenden Betrieb wird der Spannungswandler immer auf seinen Ausgangszustand zurückgesetzt und umgeht eine Vielzahl von Schwierigkeiten resultierend aus der synchronen Nutzung.

Ein konkretes Ausführungsbeispiel der Erfindung ist in der nachfolgenden Beschreibung unter Bezugnahme auf die beigefügten Figuren näher erläutert. Konkrete Merkmale dieses exemplarisches Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Die Figuren zeigen:
- Fig. 1: eine Seitenansicht eines beispielhaften Roboters, der eine Robotersteuerung aufweist, die einen erfindungsgemäßen Spannungswandler umfasst, und
- Fig. 2: einen Schaltplan des erfindungsgemäßen Spannungswandlers.

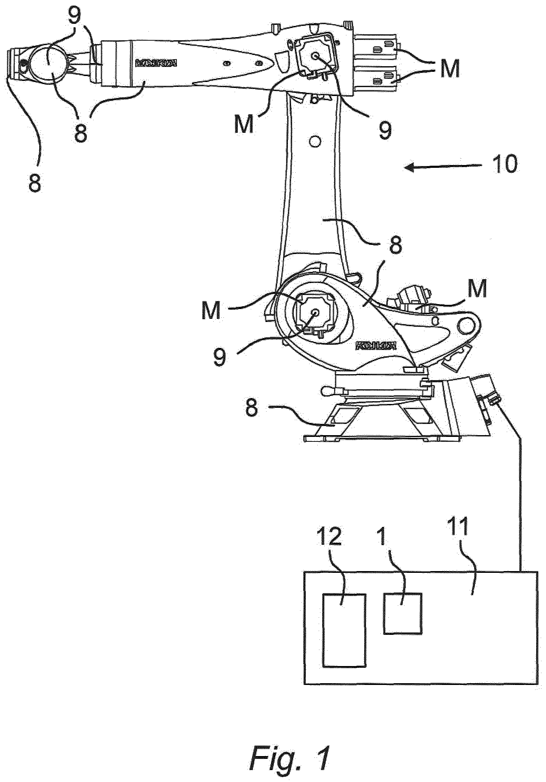

Im Falle des Ausführungsbeispiels der Fig. 1 weist der Roboter 10 mehrere Glieder 8 und die Glieder 8 gegeneinander verstellende Gelenke 9 auf. Jedes Gelenk 9 ist von jeweils einem Motor M des Roboterarms 10 angetrieben. Eine Robotersteuerung 11 ist vorgesehen, die Motoren M anzusteuern, um die Glieder 8 des Roboterarms 1 durch automatisches Verstellen der Gelenke 9 zu bewegen. Im Falle des vorliegenden Ausführungsbeispiels sind alle Gelenke 9 des Roboterarms 10 als Drehgelenke ausgebildet. Jedes Drehgelenk ist um eine Drehachse drehbar.

Im Falle des vorliegenden Ausführungsbeispiels umfasst die Robotersteuerung 11 eine Steuervorrichtung 12, die ausgebildet und eingerichtet ist, ein erstes Halbleiterschaltelement Qₕ des Spannungswandlers 1 an einem ersten Steuereingang U_{gh} und ein zweites Halbleiterschaltelement Q₁ des Spannungswandlers 1 am zweiten Steuereingang U_{g1} zu steuern.

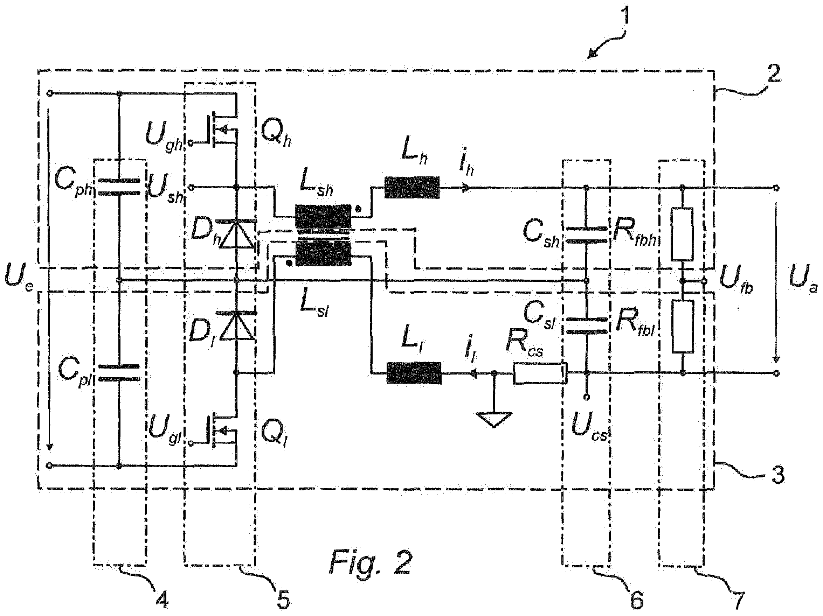

In der Fig. 2 ist der Spannungswandler 1 in Alleinstellung in Form eines Schaltplans dargestellt, welcher als Abwärtswandler ausgebildet ist, zum Tiefsetzen einer Eingangsgleichspannung Uₑ in eine gegenüber der Eingangsgleichspannung Uₑ niedrigere Ausgangsgleichspannung Uₐ.

Der Spannungswandler 1 umfasst eine erste Abwärtswandler-Schaltungsanordnung 2, welche ein erstes Halbleiterschaltelement Qₕ mit einem ersten Steuereingang U_{gh}, eine erste gekoppelte Drossel Lₛₕ mit einer ersten Freilaufdiode Dₕ, einen ersten Widerstand R_{bfh} sowie einen ersten Eingangskondensator Cₚₕ und einen ersten Ausgangskondensator Cₛₕ aufweist.

Weiterhin umfasst der Spannungswandler 1 eine zweite Abwärtswandler-Schaltungsanordnung 3, welche ein zweites Halbleiterschaltelement Qₗ mit einem zweiten Steuereingang U_{gl}, eine zweite gekoppelte Drossel Lₛₗ mit einer zweiten Freilaufdiode Dₗ, einen zweiten Widerstand R_{fbl} sowie einen zweiten Eingangskondensator Cₚₗ und einen zweiten Ausgangskondensators Cₛ₁ aufweist.

Elektronisch verschalten ist die erste Abwärtswandler-Schaltungsanordnung 2 und die zweite Abwärtswandler-Schaltungsanordnung 3 mit Hilfe einer ersten Serienschaltung des ersten Eingangskondensator Cₚₕ und des zweiten Eingangskondensator Cₚₗ, welche einen ersten Spannungsteiler 4 bilden. Das erste Halbleiterschaltelement Qₕ ist in Serie zur ersten Freilaufdiode Dₕ geschalten und das zweite Halbleiterschaltelement Qₗ ist in Serie zur zweiten Freilaufdiode Dₗ geschalten. Die erste gekoppelte Drossel Lₛₕ weist einerseits eine Verbindung zwischen dem ersten Halbleiterschaltelement Qₕ und der ersten Freilaufdiode Dₕ und andererseits eine zweite Verbindung zu einem Ausgangskondensator Cₛₕ auf. Die zweite gekoppelte Drossel Lₛₗ weist einerseits eine Verbindung zwischen dem zweiten Halbleiterschaltelement Qₗ und der zweiten Freilaufdiode Dₗ und andererseits eine zweite Verbindung zu einem Ausgangskondensator Cₛ₁ auf. Der erste Ausgangskondensator Cₛₕ ist in Serie mit dem zweiten Ausgangskondensator Cₛ₁ zu einem dritten Spannungsteiler 6 geschalten und liegt parallel zu einem Feedback-Spannungsteiler 7, welcher durch einen ersten Widerstand R_{fbh} und einem zweiten R_{fbl} gebildet wird.

Der Spannungswandler 1 weist außerdem eine schaltungstechnische Verbindung zwischen dem ersten Spannungsteiler 4, dem zweiten Spannungsteiler 5 und dem dritten Spannungsteiler 6 auf. Die Verbindung ist bei dem ersten Spannungsteiler 4 zwischen dem ersten Eingangskondensator Cₚₕ und dem zweiten Eingangskondensator Cₚₗ angeordnet. Bei dem zweiten Spannungsteiler 5 ist eine Verbindung zwischen der ersten Freilaufdiode Dₕ und der zweiten Freilaufdiode Dₗ angeordnet. Bei dem dritten Spannungsteiler 6 ist eine Verbindung zwischen dem ersten Ausgangskondensator Cₛₕ und dem zweiten Ausgangskondensator C_{S1} angeordnet.

Die erste Freilaufdiode Dₕ ermöglicht einen Stromfluss bei ausgeschalteten ersten Halbleiterschaltelement Qₕ der ersten Abwärtswandler-Schaltungsanordnung 2 und die zweite Freilaufdiode Dₗ ermöglicht einen Stromfluss bei ausgeschalteten zweiten Halbleiterschaltelement Qₗ der zweiten Abwärtswandler-Schaltungsanordnung 3.

Die erste gekoppelte Drossel Lₛₕ und die zweite gekoppelte Drossel Lₛₗ weisen eine transformatorische Koppelung auf, welche im Wesentlichen über einen Magnetkern erfolgt und eine annähernde Symmetrierung der Spannung der ersten Abwärtswandler-Schaltungsanordnung 2 und der zweiten Abwärtswandler-Schaltungsanordnung 3 sicherstellt.

Im Falle des vorliegenden Ausführungsbeispiels weist der Spannungswandler 1 ergänzend eine erste nicht gekoppelte Drossel Lₕ und eine zweite nicht gekoppelte Drossel Lₗ auf, welche in Serie zu der ersten gekoppelten Drossel Lₛₕ und der zweiten gekoppelten Drossel Lₛₗ angeordnet sind. Die erste nicht gekoppelte Drossel Lₕ und die zweite nicht gekoppelte Drossel Lₗ ermöglichen es, Varianzen beim Schalten des ersten Halbleiterschaltelementes Qₕ und des zweiten Halbleiterschaltelementes Qₗ auszugleichen.

Weiterhin weist der Spannungswandler 1 optional einen Messwiderstand R_{cs} auf, welcher in Serie zwischen der zweiten nicht gekoppelte Drossel Lₗ und dem zweiten Ausgangskondensator C_{S1} angeordnet ist.

Zum Abgriff von Messsignalen weist das Ausführungsbeispiel beispielsweise drei Abgriffe auf. Der erste Abgriff Uₛₕ befindet sich zwischen dem ersten Halbleiterschaltelement Qₕ und der Freilaufdiode Dₕ. Im konkreten Fall wird der erste Abgriff Uₛₕ jedoch nicht zum Messen genutzt, sondern nur für die Spannungsversorgung des ersten Halbleiterschaltelements Qₕ über den ersten Steuereingang U_{gh}. In anderen Ausführungsvarianten kann der Regler den ersten Abgriff Uₛₕ jedoch auch als Messsignal nutzen. Der zweite Abgriff U_{cs} befindet sich zwischen dem zweiten Ausgangskondensator Cₛₗ und dem Messwiderstand R_{cs}. Der dritte Abgriff U_{fb} befindet sich zwischen den ersten und den zweiten Ausgangsspannungsteiler bildenden Widerständen R_{fbh} und R_{fbl.}

Über den ersten Abgriff Uₛₕ und den zweiten Abgriff U_{cs}, und den dritten Abgriff U_{fb} können Signale bzw. Spannungen abgegriffen werden, die der Steuervorrichtung 12 (Fig. 1)zur Auswertung und/oder zum Ansteuern des Spannungswandlers 1 zugeführt werden können.

## Patentansprüche

1. Spannungswandler, welcher als Abwärtswandler ausgebildet ist, zum Tiefsetzen einer Eingangsgleichspannung (Uₑ) in eine gegenüber der Eingangsgleichspannung (Uₑ) niedrigere Ausgangsgleichspannung (Uₐ), aufweisend
- eine erste Abwärtswandler-Schaltungsanordnung (2) umfassend ein erstes Halbleiterschaltelement (Qₕ) mit einem ersten Steuereingang (U_{gh}), eine erste gekoppelte Drossel (Lₛₕ) mit einer ersten Freilaufdiode (Dₕ), sowie einen ersten Eingangskondensator (Cₚₕ) und einen ersten Ausgangskondensator (Cₛₕ),
- eine zweite Abwärtswandler-Schaltungsanordnung (3) umfassend ein zweites Halbleiterschaltelement (Qₗ) mit einem zweiten Steuereingang (U_{gl}), eine zweite gekoppelte Drossel (Lₛₗ) mit einer zweiten Freilaufdiode (Dₗ), sowie einen zweiten Eingangskondensator (Cₚₗ) und einen zweiten Ausgangskondensator (Cₛₗ),
wobei der erste Eingangskondensator (Cₚₕ) der ersten Abwärtswandler-Schaltungsanordnung (2) und der zweite Eingangskondensator (Cₚₗ) der zweiten Abwärtswandler-Schaltungsanordnung (3) in Serie angeordnet sind, um sich die Eingangsspannung zu teilen,
wobei das erste Halbleiterschaltelement (Qₕ) und die erste Freilaufdiode (Dₕ), sowie das zweite Halbleiterschaltelement (Qₗ) und die zweite Freilaufdiode (Dₗ) in Serie angeordnet sind, und die erste Freilaufdiode (Dₕ) und die zweite Freilaufdiode (Dₗ) ausgebildet sind bei einem geöffneten Zustand des jeweils zugeordneten Halbleiterschaltelementes (Qₕ, Qₗ) die Schaltung vor einer Überspannung der ersten gekoppelten Drossel (Lₛₕ) und der zweiten gekoppelten Drossel (Lₛₗ) zu schützen und/oder den Stromfluss der ersten gekoppelten Drossel (Lₛₕ) und der zweiten gekoppelten Drossel (Lₛₗ) während des Abbaus des magnetischen Flusses der ersten gekoppelten Drossel (Lₛₕ) und der zweiten gekoppelten Drossel (Lₛₗ) zu ermöglichen,
wobei die erste gekoppelte Drossel (Lₛₕ) und die zweite gekoppelte Drossel (Lₛₗ) transformatorisch miteinander gekoppelt sind,
wobei der erste Ausgangskondensator (Cₛₕ)und der zweite Ausgangskondensator (Cₛₗ) in Serie angeordnet sind und einen Spannungsteiler (6) bilden,
und die erste Abwärtswandler-Schaltungsanordnung (2) und die zweite Abwärtswandler-Schaltungsanordnung (3) einen gemeinsamen Feedbackspannungsteiler (7) aufweisen, welcher einen ersten Widerstand (R_{fbh}) und einen zweiten Widerstand (R_{fbl}) aufweist,
wobei die erste gekoppelte Drossel (Lₛₕ) und die zweite gekoppelte Drossel (Lₛₗ) , einen gemeinsamen Magnetkern aufweisen, wobei der gemeinsame Magnetkern wenigstens eine Hilfswicklung mit wenigstens einem Abgriff für wenigstens ein Messsignal aufweist, wobei der Spannungswandler (1) im Übergang zwischen kontinuierlichen Betrieb und Lückbetrieb betrieben wird, welcher als freischwingende Betriebsart bezeichnet wird,
wobei das erste Halbleiterschaltelement (Qₕ) des Spannungswandlers (1) und das zweite Halbleiterschaltelement (Qₗ) des Spannungswandlers (1) dann in Abhängigkeit des wenigstens einen Messignals in einem optimalen Zeitpunkt eingeschaltet werden, wenn der magnetische Fluss der ersten gekoppelten Drossel (Lsh) und der zweiten gekoppelten Drossel (Lsl) vollständig abgebaut ist.

2. Spannungswandler nach Anspruch 1, **dadurch gekennzeichnet, dass** der Spannungswandler (1) eine erste nicht gekoppelte Drossel (Lₕ) und eine zweite nicht gekoppelte Drossel (Lₗ) aufweist, welche in Serie zu der ersten und der zweiten gekoppelten Drossel (Lₛₕ, Lₛₗ) angeordnet sind.

3. Spannungswandler nach Anspruch 2, **dadurch gekennzeichnet, dass** der Spannungswandler (1) einen Messwiderstand (Rcs) aufweist, welcher in Serie zu wenigstens einer der nicht gekoppelten Drosseln (Lh, Ll) oder einer der Freilaufdioden (Dh, Dl) oder einer der Halbleiterschaltelemente (Qh, Ql) angeordnet ist, wobei der Messwiderstand (Rcs) einen ersten Anschluss aufweist, der zum Abgreifen einer ersten Messspannung (Ucs) ausgebildet ist und einen zweiten Anschluss aufweist, der insbesondere sowohl mit der nicht gekoppelten Drossel (Lh, Ll) als auch mit der Masse der Steuerspannung, die insbesondere sekundärseitig vorgesehen ist, verbunden ist.

4. Spannungswandler nach einem der Ansprüche 1 bis 3,
**dadurch gekennzeichnet, dass** der Spannungswandler (1) ausgebildet ist Eingangsgleichspannungen (Uₑ) tiefzusetzen, insbesondere eine gleichgerichtete Eingangsgleichspannung (Uₑ) aus einem Einphasennetz, Dreiphasennetz und/oder eine Eingangsgleichspannung (Uₑ) aus einem Zwischenkreis tiefzusetzen.

5. Steuervorrichtung die ausgebildet ist zum Ansteuern eines Spannungswandlers (1) nach einem der Ansprüche 1 bis 4, wobei die Steuervorrichtung (12) ausgebildet und eingerichtet ist, das erste Halbleiterschaltelement (Qₕ) des Spannungswandlers (1) am ersten Steuereingang (U_{gh}) und das zweite Halbleiterschaltelement (Qₗ) des Spannungswandlers (1) am zweiten Steuereingang (U_{gl}) zu steuern.

6. Steuervorrichtung nach Anspruch 5, **dadurch gekennzeichnet, dass** die Steuervorrichtung (12) ausgebildet und eingerichtet ist, wenigstens ein Messsignal aufzunehmen, insbesondere eine erste Messspannung (U_{cs}), eine zweite Messspannung (U_{fb}) und/oder wenigstens ein erstes Messsignal wenigstens einer Hilfswicklung des Spannungswandlers (1) aufzunehmen.

7. Steuervorrichtung nach Anspruch 5 oder 6, **dadurch gekennzeichnet, dass** die Steuervorrichtung (12) eingerichtet ist, das erste Halbleiterschaltelement (Qₕ) des Spannungswandlers (1) und das zweite Halbleiterschaltelement (Qₗ) des Spannungswandlers (1) bezüglich einer veränderbaren Einschaltdauer und/oder einer veränderbaren Ausschaltdauer zu steuern, sodass die Schaltfrequenz des Spannungswandlers (1) durch eine minimale Einschaltdauer und/oder minimale Ausschaltdauer begrenzt ist.

8. Steuervorrichtung nach Anspruch 7, **dadurch gekennzeichnet, dass** die Steuervorrichtung (12) eingerichtet ist, den Spannungswandler (1) in einem Betriebsmodus anzusteuern, der in einem Übergangsbereich zwischen Lückbetrieb und kontinuierlichen Betrieb liegt.

9. Steuervorrichtung nach einem der Ansprüche 6 bis 8,
**dadurch gekennzeichnet, dass** die Steuervorrichtung (12) ausgebildet und eingerichtet ist, den Verlauf oder den Augenblickswert der ersten Messspannung, den Verlauf oder den Augenblickswert der zweiten Messspannung und den Verlauf oder den Augenblickswert des wenigstens ersten Messsignals der wenigstens einen Hilfswicklung des Spannungswandlers (1) zu messen oder zu verarbeiten, die Messungen der Verläufe oder Augenblickswerte der ersten Messspannung, der zweiten Messspannung und des wenigstens ersten Messsignals der wenigstens einen Hilfswicklung des Spannungswandlers (1) für die schaltende Steuerung des ersten Halbleiterschaltelements (Qₕ) und des zweiten Halbleiterschaltelemente (Qi) zu nutzen, insbesondere durch eine Pulsweitenmodulation und/oder Frequenzmodulation.

10. Steuervorrichtung nach einem der Ansprüche 6 bis 9,
**dadurch gekennzeichnet, dass** die Steuervorrichtung (12) ausgebildet und eingerichtet ist, den Verlauf der ersten Messspannung (U_{cs}), den Verlauf der zweiten Messspannung (U_{fb}) und den Verlauf des ersten Messsignals der wenigstens einen Hilfswicklung zu messen, und die Messung des Verlaufs der ersten Messspannung(U_{cs}), der zweiten Messspannung (U_{fb}) und des ersten Messsignals mit wenigstens einem eingestellten Schwellwert zu vergleichen, und das erste Halbleiterschaltelement (Qₕ) und das zweite Halbleiterschaltelement (Qₗ) bei Erreichen des jeweiligen Schwellwertes zu schalten.

## Claims

1. Voltage converter, which is in the form of a step-down converter, for stepping down a DC input voltage (Uₑ) to a DC output voltage (Uₐ) that is lower than the DC input voltage (Uₑ), having
- a first step-down converter circuit arrangement (2) comprising a first semiconductor switching element (Qₕ) with a first control input (U_{gh}) , a first coupled inductor (Lₛₕ) with a first freewheeling diode (Dₕ) , and a first input capacitor (Cₚₕ) and a first output capacitor (Cₛₕ),
- a second step-down converter circuit arrangement (3) comprising a second semiconductor switching element (Qₗ) with a second control input (U_{gl}), a second coupled inductor (Lₛₗ) with a second freewheeling diode (Di), and a second input capacitor (Cₚₗ) and a second output capacitor (Cₛₗ) ,
wherein the first input capacitor (Cₚₕ) of the first step-down converter circuit arrangement (2) and the second input capacitor (Cₚₗ) of the second step-down converter circuit arrangement (3) are arranged in series in order to divide the input voltage,
wherein the first semiconductor switching element (Qₕ) and the first freewheeling diode (Dₕ), and the second semiconductor switching element (Qₗ) and the second freewheeling diode (Di) are arranged in series, and the first freewheeling diode (Dₕ) and the second freewheeling diode (Di) are designed, in the case of an open state of the respectively associated semiconductor switching element (Qₕ, Qₗ), to protect the circuit from an overvoltage of the first coupled inductor (Lₛₕ) and the second coupled inductor (Lₛₗ) and/or to enable the current flow through the first coupled inductor (Lₛₕ) and the second coupled inductor (Lₛₗ) while the magnetic flux of the first coupled inductor (Lₛₕ) and the second coupled inductor (Lₛₗ) is decaying,
wherein the first coupled inductor (Lₛₕ) and the second coupled inductor (Lₛₗ) are coupled to one another in the manner of a transformer,
wherein the first output capacitor (Cₛₕ) and the second output capacitor (Cₛₗ) are arranged in series and form a voltage divider (6),
and the first step-down converter circuit arrangement (2) and the second step-down converter circuit arrangement (3) have a common feedback voltage divider (7) that has a first resistor (R_{fbh}) and a second resistor (R_{fbl}) , wherein the first coupled inductor (Lₛₕ) and the second coupled inductor (Lₛₗ) have a common magnetic core, wherein the common magnetic core has at least one auxiliary winding with at least one tap for at least one measurement signal, wherein the voltage converter (1) is operated in the transition between continuous operation and intermittent operation, which is referred to as free-running mode of operation,
wherein the first semiconductor switching element (Qₕ) of the voltage converter (1) and the second semiconductor switching element (Qₗ) of the voltage converter (1) are switched on at an optimal time depending on the at least one measurement signal if the magnetic flux of the first coupled inductor (Lsh) and the second coupled inductor (Lsl) has completely decayed.

2. Voltage converter according to Claim 1, **characterized in that** the voltage converter (1) has a first uncoupled inductor (Lₕ) and a second uncoupled inductor (Lₗ) , which are arranged in series with the first and the second coupled inductor (Lₛₕ, Lₛₗ) .

3. Voltage converter according to Claim 2, **characterized in that** the voltage converter (1) has a measuring resistor (Rcs) that is arranged in series with at least one of the uncoupled inductors (Lh, Ll) or one of the freewheeling diodes (Dh, Dl) or one of the semiconductor switching elements (Qh, Ql), wherein the measuring resistor (Rcs) has a first connection that is designed to tap off a first measurement voltage (Ucs) and has a second connection that is connected in particular both to the uncoupled inductor (Lh, Ll) and to the control voltage earth, which is provided in particular on the secondary side.

4. Voltage converter according to one of Claims 1 to 3, **characterized in that** the voltage converter (1) is designed to step down DC input voltages (Uₑ), in particular to step down a rectified DC input voltage (Uₑ) from a single-phase network, three-phase network and/or a DC input voltage (Uₑ) from an intermediate circuit.

5. Control device that is designed to actuate a voltage converter (1) according to one of Claims 1 to 4, wherein the control device (12) is designed and configured to control the first semiconductor switching element (Qₕ) of the voltage converter (1) at the first control input (U_{gh}) and the second semiconductor switching element (Qₗ) of the voltage converter (1) at the second control input (Ugl) .

6. Control device according to Claim 5, **characterized in that** the control device (12) is designed and configured to record at least one measurement signal, in particular to record a first measurement voltage (U_{cs}), a second measurement voltage (U_{fb}) and/or at least a first measurement signal of at least one auxiliary winding of the voltage converter (1).

7. Control device according to Claim 5 or 6, **characterized in that** the control device (12) is configured to control the first semiconductor switching element (Qₕ) of the voltage converter (1) and the second semiconductor switching element (Qₗ) of the voltage converter (1) with respect to a variable switched-on duration and/or a variable switched-off duration, with the result that the switching frequency of the voltage converter (1) is limited by a minimum switched-on duration and/or minimum switched-off duration.

8. Control device according to Claim 7, **characterized in that** the control device (12) is configured to actuate the voltage converter (1) in an operating mode that is in a transition region between intermittent operation and continuous operation.

9. Control device according to one of Claims 6 to 8, **characterized in that** the control device (12) is designed and configured to measure or to process the profile or the instantaneous value of the first measurement voltage, the profile or the instantaneous value of the second measurement voltage and the profile or the instantaneous value of the at least first measurement signal of the at least one auxiliary winding of the voltage converter (1), and to use the measurements of the profiles or instantaneous values of the first measurement voltage, of the second measurement voltage, and of the at least first measurement signal of the at least one auxiliary winding of the voltage converter (1) for the switching control of the first semiconductor switching element (Qₕ) and of the second semiconductor switching element (Qi), in particular using pulse-width modulation and/or frequency modulation.

10. Control device according to one of Claims 6 to 9, **characterized in that** the control device (12) is designed and configured to measure the profile of the first measurement voltage (U_{cs}), the profile of the second measurement voltage (Uf_{b}) and the profile of the first measurement signal of the at least one auxiliary winding, and to compare the measurement of the profile of the first measurement voltage (U_{cs}) , of the second measurement voltage (Uf_{b}) and of the first measurement signal with at least one set threshold value, and to switch the first semiconductor switching element (Qₕ) and the second semiconductor switching element (Qₗ) upon the respective threshold value being reached.

## Revendications

1. Convertisseur de tension, lequel est réalisé sous la forme d'un convertisseur abaisseur, destiné à abaisser une tension continue d'entrée (Uₑ) en une tension continue de sortie (Uₐ) plus faible en comparaison de la tension continue d'entrée (Uₑ), possédant
- un premier arrangement de circuit convertisseur abaisseur (2) comportant un premier élément de commutation semiconducteur (Qₕ) pourvu d'une première entrée de commande (U_{gh}) , une première bobine de choc couplée (Lₛₕ) pourvue d'une première diode de roue libre (Dₕ) ainsi qu'un premier condensateur d'entrée (Cₚₕ) et un premier condensateur de sortie (Cₛₕ),
- un deuxième arrangement de circuit convertisseur abaisseur (3) comportant un deuxième élément de commutation semiconducteur (Qₗ) pourvu d'une deuxième entrée de commande (U_{gl}) , une deuxième bobine de choc couplée (Lₛₗ) pourvue d'une deuxième diode de roue libre (Dₗ) ainsi qu'un deuxième condensateur d'entrée (Cₚₗ) et un deuxième condensateur de sortie (Cₛₗ),
le premier condensateur d'entrée (Cₚₕ) du premier arrangement de circuit convertisseur abaisseur (2) et le deuxième condensateur d'entrée (Cₚₗ) du deuxième arrangement de circuit convertisseur abaisseur (3) étant disposés en série afin de se répartir la tension d'entrée, le premier élément de commutation semiconducteur (Qₕ) et la première diode de roue libre (Dₕ) ainsi que le deuxième élément de commutation semiconducteur (Qi) et la deuxième diode de roue libre (Dₗ) étant disposés en série, et la première diode de roue libre (Dₕ) et la deuxième diode de roue libre (Dₗ) étant configurées pour, lors d'un état ouvert de l'élément de commutation semiconducteur (Qₕ, Qi) respectivement associé, protéger le circuit contre une surtension de la première bobine de choc couplée (Lₛₕ) et de la deuxième bobine de choc couplée (Lₛₗ) et/ou rendre possible le flux de courant de la première bobine de choc couplée (Lₛₕ) et de la deuxième bobine de choc couplée (Lₛₗ) pendant la suppression du flux magnétique de la première bobine de choc couplée (Lₛₕ) et de la deuxième bobine de choc couplée (Lₛₗ),
la première bobine de choc couplée (Lₛₕ) et la deuxième bobine de choc couplée (Lₛₗ) étant couplées entre elles à la manière d'un transformateur,
le premier condensateur de sortie (Cₛₕ) et le deuxième condensateur de sortie (Cₛₗ) étant disposés en série et formant un diviseur de tension (6),
et le premier arrangement de circuit convertisseur abaisseur (2) et le deuxième arrangement de circuit convertisseur abaisseur (3) possédant un diviseur de tension de contre-réaction (7) commun, lequel possède une première résistance (R_{fbh}) et une deuxième résistance (R_{fbl}),
la première bobine de choc couplée (Lₛₕ) et la deuxième bobine de choc couplée (Lₛₗ) possédant un noyau magnétique commun, le noyau magnétique commun possédant au moins un enroulement auxiliaire pourvu d'au moins une prise pour au moins un signal de mesure, le diviseur de tension (1) fonctionnant en transition entre un régime continu et un régime discontinu, ce qui est désigné par mode de fonctionnement à oscillation libre,
le premier élément de commutation semiconducteur (Qₕ) du convertisseur de tension (1) et le deuxième élément de commutation semiconducteur (Qi) du convertisseur de tension (1) étant alors mise en circuit à un instant optimal en fonction de l'au moins un signal de mesure, lorsque le flux magnétique de la première bobine de choc couplée (Lₛₕ) et de la deuxième bobine de choc couplée (Lₛₗ) est entièrement supprimé.

2. Convertisseur de tension selon la revendication 1, **caractérisé en ce que** le convertisseur de tension (1) possède une première bobine de choc non couplée (Lₕ) et une deuxième bobine de choc non couplée (Lₗ), lesquelles sont disposées en série avec la première et la deuxième bobine de choc couplée (Lₛₕ, Lₛₗ) .

3. Convertisseur de tension selon la revendication 2, **caractérisé en ce que** le convertisseur de tension (1) possède une résistance de mesure (Rcs), laquelle est disposée en série avec au moins l'une des bobines de choc non couplées (Lₕ, Lₗ) ou l'une des diodes de roue libre (Dₕ, Dₗ) ou l'un des éléments de commutation semiconducteurs (Qₕ, Qi), la résistance de mesure (Rcs) possédant une première borne qui est configurée pour prélever une première tension de mesure (Ucs) et possédant une deuxième borne qui est reliée notamment à la fois à la bobine de choc non couplée (Lₕ, Lₗ) et à la masse de la tension de commande, laquelle est notamment présente du côté secondaire.

4. Convertisseur de tension selon l'une des revendications 1 à 3, **caractérisé en ce que** le convertisseur de tension (1) est configuré pour abaisser des tensions continues d'entrée (Uₑ), notamment abaisser une tension continue d'entrée (Uₑ) redressée provenant d'un réseau monophasé, d'un réseau triphasé et/ou une tension continue d'entrée (Uₑ) provenant d'un circuit intermédiaire.

5. Dispositif de commande, qui est configuré pour commander un convertisseur de tension selon l'une des revendications 1 à 4, le dispositif de commande (12) étant configuré et conçu pour commander le premier élément de commutation semiconducteur (Qₕ) du convertisseur de tension (1) à la première entrée de commande (U_{gh}) et le deuxième élément de commutation semiconducteur (Qₗ) du convertisseur de tension (1) à la deuxième entrée de commande (U_{gl}) .

6. Dispositif de commande selon la revendication 5, **caractérisé en ce que** le dispositif de commande (12) est configuré et conçu pour enregistrer au moins un signal de mesure, notamment enregistrer une première tension de mesure (U_{cs}) , une deuxième tension de mesure (Uf_{b}) et/ou au moins un premier signal de mesure d'au moins un enroulement auxiliaire du convertisseur de tension (1).

7. Dispositif de commande selon la revendication 5 ou 6, **caractérisé en ce que** le dispositif de commande (12) est conçu pour commander le premier élément de commutation semiconducteur (Qₕ) du convertisseur de tension (1) et le deuxième élément de commutation semiconducteur (Qi) du convertisseur de tension (1) en ce qui concerne une durée de mise en circuit modifiable et/ou une durée de mise hors circuit modifiable, de sorte que la fréquence de commutation du convertisseur de tension (1) est limitée par une durée de mise en circuit minimale et/ou une durée de mise hors circuit minimale.

8. Dispositif de commande selon la revendication 7, **caractérisé en ce que** le dispositif de commande (12) est conçu pour commander le convertisseur de tension (1) dans un mode de fonctionnement qui se trouve dans une zone de transition entre un régime discontinu et un régime continu.

9. Dispositif de commande selon l'une des revendications 6 à 8, **caractérisé en ce que** le dispositif de commande (12) est configuré et conçu pour mesurer ou pour traiter l'évolution ou la valeur instantanée de la première tension de mesure, l'évolution ou la valeur instantanée de la deuxième tension de mesure et l'évolution ou la valeur instantanée de l'au moins un premier signal de mesure de l'au moins un enroulement auxiliaire du convertisseur de tension (1), utiliser les mesures des évolutions ou des valeurs instantanées de la première tension de mesure, de la deuxième tension de mesure et de l'au moins un premier signal de mesure de l'au moins un enroulement auxiliaire du convertisseur de tension (1) pour la commande en commutation du premier élément de commutation semiconducteur (Qₕ) et du deuxième élément de commutation semiconducteur (Qₗ), notamment par une modulation d'impulsions en largeur et/ou d'une modulation de fréquence.

10. Dispositif de commande selon l'une des revendications 6 à 9, **caractérisé en ce que** le dispositif de commande (12) est configuré et conçu pour mesurer l'évolution de la première tension de mesure (U_{cs}), l'évolution de la deuxième tension de mesure (U_{fb}) et l'évolution du premier signal de mesure de l'au moins un enroulement auxiliaire, et comparer la mesure de l'évolution de la première tension de mesure (U_{cs}) , de la deuxième tension de mesure (U_{fb}) et du premier signal de mesure avec au moins une valeur de seuil réglée, et commuter le premier élément de commutation semiconducteur (Qₕ) et le deuxième élément de commutation semiconducteur (Qi) lors de l'atteinte de la valeur de seuil respective.
